Europäisches Patentamt

(19) European Patent Office

Office européen des brevets

(11) Veröffentlichungsnummer: **0 050 714**
**A2**

(12) **EUROPÄISCHE PATENTANMELDUNG**

(21) Anmeldenummer: **81106020.1**

(22) Anmeldetag: **31.07.81**

(51) Int. Cl.³: **B 66 F 17/00**
**G 01 G 19/08**

(30) Priorität: **24.10.80 DE 3040145**

(43) Veröffentlichungstag der Anmeldung:
**05.05.82 Patentblatt 82/18**

(84) Benannte Vertragsstaaten:
**AT CH FR GB IT LI SE**

(71) Anmelder: **Mess- und Wiegetechnik GmbH & Co. KG**
**Degerserstrasse 28**
**D-3015 Wennigsen/Deister(DE)**

(72) Erfinder: **Strauch, Erich, Dipl.-Ing.**
**Rottkampweg 3**
**D-3013 Barsinghausen(DE)**

(72) Erfinder: **Göbel, Rainer**
**Suerser Weg 6**
**D-3015 Wennigsen(DE)**

(74) Vertreter: **Rücker, Wolfgang, Dipl.-Chem.**
**Hubertusstrasse 2**
**D-3000 Hannover 1(DE)**

(54) **Lastanzeiger für Flurförderer, insbesondere Gabelstapler.**

(57) Die Erfindung betrifft einen Lastanzeiger für Flurförderer, insbesondere Gabelstapler, wobei auf jeder Zinke der Gabel des Gabelstaplers wenigstens eine Meßzelle angeordnet ist, auf die die Last einwirkt.

EP 0 050 714 A2

**0050714**

# DIPL.-CHEM. WOLFGANG RÜCKER
## PATENTANWALT

Hubertusstraße 2
3000 Hannover 1
Telefon (0511) 66 30 71/72

Meß- und Wiegetechnik

GmbH & Co. KG

Ihr Zeichen:
Your ref.:

Mein Zeichen:
My ref.:　90/1

Datum
Date　10. Oktober 1980

Lastanzeiger für Flurförderer insbesondere Gabelstapler

Die Erfindung betrifft einen Lastanzeiger für Flurförderer insbesondere Gabelstapler.

Als Lastanzeiger für Gabelstapler sind Geräte bekannt, die aus dem spezifischen Druck und der wirksamen Fläche des Hubzylinders das Gewicht der auf den Gabeln ruhenden Last ermitteln. Diese Meßmethode ist mit Fehlern behaftet, die sich aus der veränderlichen Kolbenreibung im Hubzylinder bei Stillstand und bei Bewegung ergibt sowie aus der Reibung des Hubschlittens in seinen Führungen, die sich mit dem Alter des Staplers stark verändert. Außerdem gibt es zahlreiche andere Fehler, die aufgrund der Konstruktion, des Zustandes des Gerätes und dergleichen, die in die Meßwerte eingehen.

Es ist daher ein höchst ungenaues Verfahren, auf diese Weise die Last zu ermitteln, die auf der Gabel eines Staplers ruht.

WR/Me

Postscheck: Hannover 28 56 56-308 (BLZ 250 100 30) — Commerzbank · Hannover 3348 053 (BLZ 250 400 69) — Deutsche Bank Hannover: 22/42 039 (BLZ 250 700 70)

Aufgabe der vorliegenden Erfindung ist es daher, einen Lastanzeiger für Flurförderer insbesondere Gabelstapler zu schaffen, der diese Nachteile nicht besitzt, eine genaue Lastanzeige ermöglicht und darüberhinaus den Verwendungs- und Gebrauchszweck des Gabelstaplers nicht abträglich beeinträchtigt und keine zusätzlichen An- oder Umbauten an dem Flurförderer selbst verlangt. Gelöst wird diese Aufgabe erfindungsgemäß dadurch, daß auf jeder Zinke der Gabel des Gabelstaplers wenigstens eine Meßzelle angeordnet ist, auf die die Last einwirkt.

In Verfolg des Erfindungsgedankens sind mehrere Meßzellen, vorzugsweise fünf innerhalb eines Schuhes angeordnet, die auf die Oberfläche einer jeden Zinke aufruhen, so daß die Last über die Meßzellen auf die Gabel des Gabelstaplers drückt.

Der Schuh, in welchem die Meßzellen angeordnet sind hat im Querschnitt U-förmige Gestalt und die Meßzellen sind so angeordnet auf der Innenseite oder Innenfläche des U-förmigen Schuhes, daß die Last jeweils über eine 3-Punkt-Abstützung der Meßzellen auf die Gabel des Gabelstaplers einwirkt, ganz gleich ob die Last hinten auf der Gabel oder weiter vorn aufruht. Die Anordnung ist dabei so getroffen, daß innerhalb des Schuhes jeweils zwei Zellen nebeneinander an den Enden des Schuhes angeordnet sind während eine fünfte auf der Längmittellinnie des Schuhes und in dessen Mitte angeordnet ist.

Die Meßzellen selbst sind wieder flache zylindrische,
becherförmige Körper, die auf ihrer äußeren Bodenfläche eine
zentrische knopfförmige Erhebung aufweisen, mit der sich die
Meßzelle auf die obere Oberfläche einer jeden Zinke der Gabel
des Gabelstaplers abstützt. Im Innenraum des becherförmigen
Körpers sind auf dem Boden des Hohlraumes die eigentlichen
Meßzellen, beispielsweise durch Kleben befestigt, die sich
bei der Einwirkung der Last auf die Ränder des Bechers bzw.
auf den auf der Mitte des äußeren Bodens befindlichen Knopf
abstützen wobei die Verbiegungen in Form elektrischer Ströme
gemessen werden.

Die Summe der aus den Meßzellen stammenden elektrischen
Meßwerte wird als Lastgewicht in kg oder t nach entsprechender
Bearbeitung auf einem Analog- oder Digitalgerät angezeigt.
In diesem Gerät ist auch eine Tara-Ausgleichsvorrichtung eingebaut. Die Dicke der Gabeln bzw. der Zinken des Gabelstaplers
mit aufgeschobenem Meßschuh ist nur um ca. 15 mm größer als
die der genormten Gabel, so daß das Unterfahren der Gabel unter
genormte Paletten mit dem erforderlichen Spielraum noch möglich
ist. Ein weiterer Vorteil ist der, daß sich der Lastanzeiger
bzw. die Schuhe mit den Meßzellen schnell und einfach auf jeder
genormten Gabel eines Gabelstaplers anbringen lässt und auch
genauso schnell und einfach wieder entfernen lässt. Im
Falle einer Reparatur, Wartung oder Überprüfung braucht nicht der gesamte Gabelstapler herangezogen zu werden sondern lediglich der Schuh mit den Meßzellen.

Durch die 3-Punkt-Lagerung der Last auf dem Schuh mit den
Meßzellen und damit wiederum auf der Gabel wird eine genaue
Lastanzeige, auch bei unterschiedlichen Lasten, gewährleistet.

Der Schuh, oder in seiner fertigen Ausgestaltung mit den
Meßzellen auch Meßschuh genannt, ist auf der Zinke der Gabel
gesichert damit er nicht beim Auf- oder Absetzen der Last oder
sonstwie von der Zinke geworfen oder abgestreift werden kann.
Zu diesem Zweck ist der Schuh an seinem einen Ende vorzugsweise mit einer U-förmigen Umbiegung versehen, dergestalt, daß
sich an einem Ende eine Art Tasche bildet während am anderen
Ende auf der Oberseite eine Leiste befestigt ist, die hinter
einem Vorsprung eines abschraubbaren Befestigungsteiles liegt.

Die Tasche greift über die vordere Spitze der Zinke und
verhindert ein Ab- oder Hochheben. Die hintere läßt ein Herunterziehen des Schuhes nicht zu während die seitlichen Flanschen
ein seitliches Herunterschieben verhindern. Bei der Halterung
des Schuhes geht man daher vorteilhafterweise von einem entsprechend bemessenen Stück U-Stahl aus, das dann nur noch mit
den Meßzellen und den Halteeinrichtungen an den Enden versehen
zu werden braucht. Die Erfindung wird nun anhand eines Ausführungsbeispieles, welches in der Zeichnung dargestellt ist, näher
erläutert.

In der Zeichnung stellen dar:

Fig. 1: eine Seitenansicht, teilweise im
Schnitt einer Zinke des Gabelstaplers mit der darauf angeordneten
Lastenanzeigevorrichtung

Fig. 2: eine Draufsicht auf die Ausgestaltung nach Fig. 1

Fig. 3: eine Ansicht gegen die Unterseite der Meßzelle

Fig. 4: ein Teilschnitt durch eine
Meßzelle in ihrer Anordnung
an dem Schuh und

Fig. 5: einen Querschnitt auf der
Linie V - V der Fig. 1.

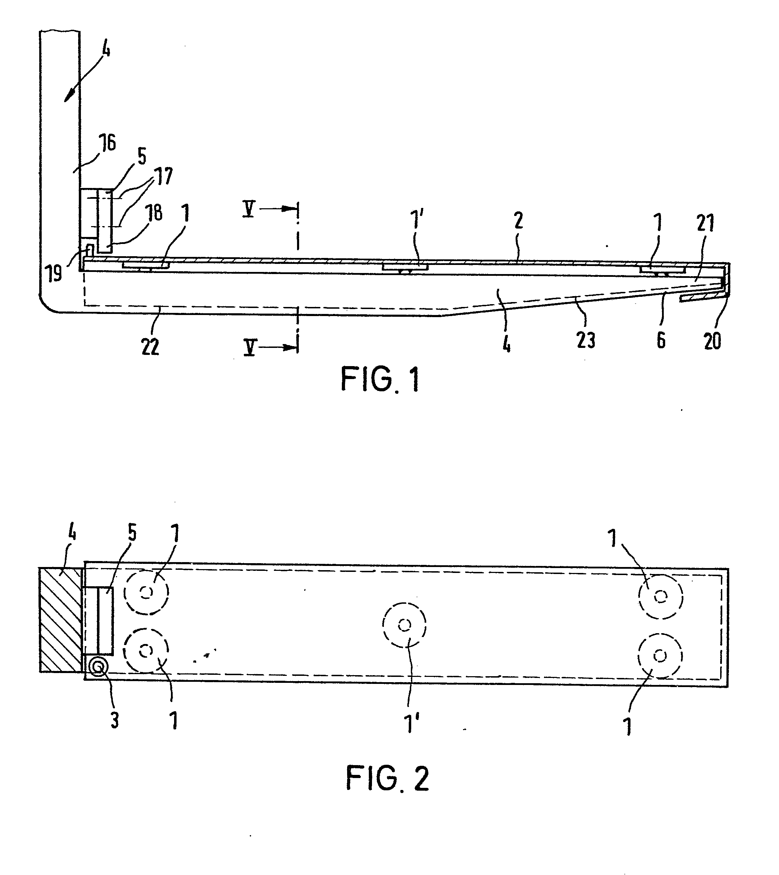

Aus Fig. 1 ist die Seitenansicht einer Zinke 4 einer Gabel
eines Flurförderers erkennbar, auf der die Vorrichtung zur
Lastanzeige angeordnet ist. Diese Lastanzeigevorrichtung besteht aus einem im Querschnitt U-förmigen Teil, der als Schuh 2 bezeichnet ist. Auf der Innenseite des Schuhes des Steges des U-förmigen Profiles sind Meßzellen 1 angeordnet.

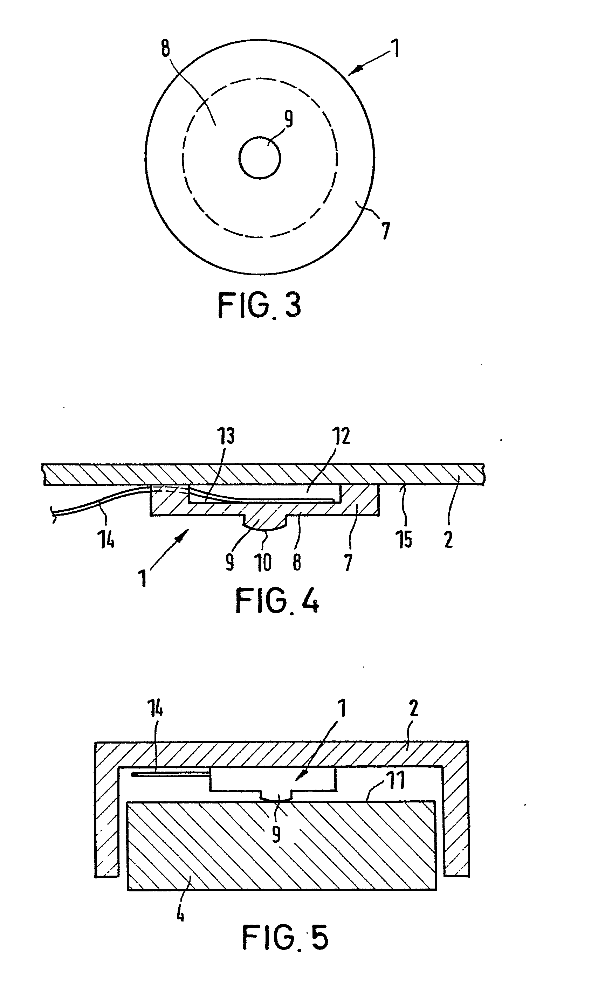

Die Anordnung dieser Meßzellen ist deutlich aus Fig. 2 ersichtlich und zwar ist sie so erfolgt, daß die Last im wesentlichen immer auf mindestens drei Punkten aufruht, ganz gleich ob die Last vorne auf der Gabel oder hinten aufliegt. Aus Fig. 2 ist zu erkennen, daß durch die Anordnung zweier Meßzellen 1 am inneren Ende der Gabel 4 und zweier Meßzellen 1 am äußeren Ende bei 6 sowie einer Meßzelle 1' in der Mitte des Schuhes zwei 3-Punkt-Lagerungen entstehen. Die Meßzellen sind deutlicher in Fig. 3 bis 5 dargestellt und zwar ist die Meßzelle ein flacher becherförmiger zylindrischer Körper mit einem verstärkten Rand 7 und einem dünneren Boden 8 auf dessen äußerer Oberfläche mittig eine knopf- oder zapfenförmige Erhebung 9 angeordnet ist, die mit ihrer nach außen weisenden Fläche 10, wie aus Fig. 5 ersichtlich, auf der Oberfläche 11 der Zinke 4 der Gabel aufruht. Im Inneren des zylindrischen Raumes 12 sind die eigentlichen Meßelemente in Streifenform, wie bei 13 angedeutet, befestigt und zwar mehrere vorzugsweise vier Stück, die in gleichen Winkelabständen um den Mittelpunkt der Meßzelle angeordnet sind.

Die elektrischen Signale dieser Meßstreifen werden über Leitungen 14 zu weiteren elektrischen Einrichtungen geführt, die die Signale verstärken und/oder umsetzen und an geeigneten analogen oder digitalen Anzeigegeräten anzeigen, die wiederum in kg oder t oder sonst einer Meßeinheit kalibriert sein können. Die Meßzelle 1 ist vorzugsweise durch Schrauben oder Kleben an der Innenfläche 15 des Schuhes 2 befestigt.

Der Schuh mit den Meßzellen 1 stellt ein völlig selbständiges Teil des Flurförderers dar und kann beliebig oft auf den Zinken der Gabel dieses Förderers angeordnet oder wieder weggenommen werden. An dem Förderer sind überhaupt keine zusätzlichen Umbauten oder Änderungen anzubringen oder vorzunehmen, lediglich an dem rückwärtigen Teil 16 der Gabel ist eine Haltevorrichtung lösbar befestigt, die das Bezugszeichen 5 trägt. Diese Haltevorrichtung wird durch Schrauben 17 an dem Teil 16 der Gabel bzw. an einer jeden Zinke befestigt und greift mit einem Flansch 18 über einen Stollen 19, der seinerseits wieder auf der Oberseite des Schuhes 2 und an dessen hinterem Ende beispielsweise durch Schweißen befestigt ist.

Um zu verhindern, daß der Schuh mit den Meßzellen 1 am vorderen Ende von der Gabel abgehoben wird ist das vordere Ende des Schuhes mit einer Tasche 20 versehen, die beim Aufsetzen des Schuhes über die Spitze 21 der Zinke 4 der Gabel gestreift wird worauf dann die Haltevorrichtung 5 mit den Schrauben 17 befestigt wird. Auf diese Weise ist der Schuh 2 auf der Zinke der Gabel in einfacher Weise lösbar befestigt und kann in kürzester Zeit montiert und demontiert werden.

In Fig. 1 kennzeichnet die gestrichelte Linie 22 die Ränder der Flansche des U-Profiles, aus welchem der Schuh 2 gefertigt ist. Entsprechend der Gestalt der Zinke kann dieser Rand, wie bei 23 angedeutet, spitzwinklig abgeschrägt sein. Das Bezugszeichen 3 stellt eine Steckverbindung dar zum Anschluß eines Kabels, um die elektrischen Signale aus den Meßzellen zu den Anzeigevorrichtungen zu leiten.

Der erfindungsgemäße Lastanzeiger ist einfach und übersichtlich in seiner Handhabung, erfordert keinerlei grundsätzliche Umbauten oder Anbauten an dem Flurförderer, ist daher auch leicht zu warten und falls erforderlich zu reparieren und was besonders vorteilhaft ist: Er kann für alle Arten von Fahrzeugen benutzt werden, die mit Greiforganen oder ähnlichen lasttragenden Elementen ausgestattet sind, also auch für Spitz-, Quergabel- und Schwenkgabelstapler und sonstige Flurförderungseinrichtungen.

Patentansprüche.

P A T E N T A N S P R Ü C H E

1. Lastanzeiger für Flurförderer insbesondere Gabelstapler, dadurch gekennzeichnet, daß auf jeder Zinke (4)
der Gabel des Gabelstaplers wenigstens eine Meßzelle (1)
angeordnet ist, auf die die Last einwirkt.

2. Lastanzeiger nach Anspruch 1, dadurch gekennzeichnet,
daß mehrere Meßzellen (1, 1'), vorzugsweise fünf innerhalb eines Schuhes (2) angeordnet sind, die auf die Oberfläche (11) einer jeden Zinke (4) aufruhen.

3. Lastanzeiger nach Anspruch 1 und 2, dadurch gekennzeichnet, daß der Schuh (2), in welchem die Meßzellen angeordnet sind (Meßzellen 1, 1'), im Querschnitt U-förmige Gestalt hat und die Anordnung der Meßzellen auf der
Oberfläche des Steges des U-förmigen Schuhes (2) so erfolgt, daß die Last jeweils über mindestens drei Punkte
abgestützt auf die Zinke (4) der Gabel des Gabelstaplers
einwirkt.

4. Lastanzeiger nach Anspruch 3, dadurch gekennzeichnet,
daß die Meßzellenanordnung so getroffen ist, daß innerhalb des Schuhes jeweils zwei Zellen (1) nebeneinander
an den Enden des Schuhes angeordnet sind während die fünfte (1') auf der Längslinie des Schuhes und in
dessen Mitte angeordnet ist.

5. Lastanzeiger nach Anspruch 1 bis 4, <u>dadurch gekenn-
zeichnet</u>, daß die Meßzellen (1, 1') becherförmige,
flache zylindrische Körper sind, die auf ihrer äußeren
Bodenfläche (8) knopfförmige Erhebungen (9) tragen,
mit der sich die einzelne Meßzelle auf die Oberfläche
(11) einer jeden Zinke der Gabel des Gabelstaplers abstützt.

6. Lastanzeiger nach Anspruch 4 und 5, <u>dadurch gekenn-
zeichnet</u>, daß im Innenraum des becherförmigen Körpers
der Meßzelle (1, 1') beispielsweise durch Kleben, die
elektrische Signale erzeugenden Meßstreifen befestigt
sind.

FIG. 1

FIG. 2

FIG. 3

FIG. 4

FIG. 5